(19) Europäisches Patentamt / European Patent Office / Office européen des brevets

(11) **EP 1 440 732 B1**

(12) **EUROPÄISCHE PATENTSCHRIFT**

(45) Veröffentlichungstag und Bekanntmachung des Hinweises auf die Patenterteilung:
**07.07.2010   Patentblatt 2010/27**

(51) Int Cl.:
*B01L 3/00* [(2006.01)]        *F15C 1/00* [(2006.01)]

(21) Anmeldenummer: **04001179.3**

(22) Anmeldetag: **21.01.2004**

(54) **Mikrofluidische Anordnung zum Dosieren von Flüssigkeiten**

Microfluidic configuration for dosing liquids

Configuration microfluidique pour le dosage des liquides

(84) Benannte Vertragsstaaten:
**AT BE BG CH CY CZ DE DK EE ES FI FR GB GR HU IE IT LI LU MC NL PT RO SE SI SK TR**

(30) Priorität: **23.01.2003   DE 10302721**

(43) Veröffentlichungstag der Anmeldung:
**28.07.2004   Patentblatt 2004/31**

(60) Teilanmeldung:
**09177533.8**

(73) Patentinhaber: **Boehringer Ingelheim microParts GmbH**
**44227 Dortmund (DE)**

(72) Erfinder:
• **Peters, Ralf-Peter, Dr.**
  **51467 Bergisch-Gladbach (DE)**
• **Osterloh, Dirk**
  **59423 Unna (DE)**
• **Blankenstein, Gert, Dr.**
  **44139 Dortmund (DE)**

(74) Vertreter: **Graefe, Jörg et al**
**Fritz Patent- und Rechtsanwälte**
**Postfach 1580**
**59705 Arnsberg (DE)**

(56) Entgegenhaltungen:
WO-A-01/74490       WO-A-01/78893
WO-A-02/11888       US-A- 5 230 866
US-A- 6 117 396      US-A1- 2002 195 463

**Beschreibung**

Die vorliegende Erfindung betrifft eine mikrofluidische Anordnung zum Dosieren und Trennen einer oder mehrerer erster dosierter Flüssigkeitsmengen von einer zweiten Flüssigkeitsmenge.

Aus dem Stand der Technik sind verschiedene derartige mikrofluidische Anordnungen bekannt. Derartige mikrofluidische Anordnungen werden beispielsweise zum Dosieren und Injizieren von Flüssigkeiten für nasschemische, biochemische und diagnostische Analysen benutzt. Dabei werden u. a. Volumenelemente mit einer definierten ersten Flüssigkeitsmenge befüllt. Diese definierte Flüssigkeitsmenge wird von einer überschüssigen zweiten Flüssigkeitsmenge getrennt. Das Trennen der überschüssigen Flüssigkeitsmenge von der dosierten Flüssigkeitsmenge geschieht dabei heutzutage in der Regel durch mechanische Elemente oder durch eine Gasphase. Die Gasphase kann dabei durch ein Absaugen der überschüssigen Flüssigkeitsmenge erhalten werden. Ebenso ist es möglich, dass die überschüssige Flüssigkeitsmenge mittels eines Druckstoßes von der dosierten Flüssigkeitsmenge "weggeblasen" wird.

Ein Nachteil bei den bisherigen mikrofluidischen Anordnungen zum Dosieren und Trennen mittels einer Gasphase ist, dass zum Erzeugen des Unterdrucks bzw. des Überdrucks (absaugen bzw. wegblasen) zum Trennen der ersten von der zweiten Flüssigkeitsmenge Druckerzeugungsmittel vorgesehen sein müssen, mittels derer der notwendige Druckstoß erzeugt wird. Dagegen ist für das Dosieren selbst ein Druckstoß nicht erforderlich, da die zu dosierende Flüssigkeitsmenge oftmals über Kapillarkräfte in das Dosiervolumen eingefüllt wird. Dieses ist z.B. in der Druckschrift WO 99/46 045 offenbart. Auch das Dosieren könnte grundsätzlich mit Druckerzeugungsmitteln durch Ansaugen oder Einblasen geschehen. Diese Möglichkeit erwies sich jedoch auch in der Vergangenheit bereits als aufwendig und wird, wo es möglich ist, durch das Befüllen mittels Kapillarkräfte ersetzt.

Aus dem Dokument US 2002/0195463 A1 (z. B. Fig. 12a, b) ist eine Anordnung bekannt, mit der aus einem ersten Kanal Flüssigkeitsmengen in zweite Kanäle transportiert werden können, um die Flüssigkeitsmengen in diesen zweiten Kanälen abzumessen. Die im ersten Kanal überschüssige Menge der Flüssigkeit, die nicht in den zweiten Kanälen aufgenommen wird, wird durch eine Druckdifferenz aus dem ersten Kanal abgeführt. Die zweiten Kanäle münden in dritte Kanäle. Diese dritten Kanäle sind nicht weiter beschrieben. Insbesondere ist nicht beschreiben, das die Flüssigkeiten aus den dritten Kanälen entnommen werden können.

Eine weitere mikrofluidische Anordnung ist in dem Dokument US 6,117,396 offenbart. Die dort offenbarte Anordnung ermöglicht ebenfalls das Abmessen von ersten Flüssigkeitsmengen und deren Trennung von einer zweiten Flüssigkeitsmenge. Die Anordnung weist ebenfalls einen ersten Kanal auf, über den eine Anzahl von zweiten Kanälen befüllt werden. Die dosierten Mengen können in dritte Kanäle überführt werden. Eine Entnahme der Flüssigkeitsmengen aus den dritten Kanälen ist nicht möglich.

Der Erfindung liegt vor dem Hintergrund der aufgezeigten Nachteile der Anordnungen aus dem Stand der Technik die Aufgabe zugrunde, eine mikrofluidische Anordnung vorzuschlagen, bei welcher das Trennen einer oder mehrerer dosierter erster Flüssigkeitsmengen von der im Allgemeinen überschüssigen zweiten Flüssigkeitsmenge ohne Druckerzeugungsmittel erreicht wird.

Diese Aufgabe wird erfindungsgemäß durch eine mikrofluidische Anordnung gemäß Anspruch 1 gelöst. Der Erfindung liegt der Gedanke zugrunde, auch für das Trennen der dosierten Flüssigkeitsmenge von der überschüssigen Flüssigkeitsmenge Kapillarkräfte zu nutzen. Damit diese Kapillarkräfte genutzt werden können, sollte die mikrofluidische Anordnung auf die im Anspruch 1 bestimmte Weise ausgeführt sein. So weist eine erfindungsgemäße mikrofluidische Anordnung einen ersten Kanal und mehrere zweite Kanäle auf. Der erste Kanal hat dabei einen Einlass und einen Auslass. Im Bereich des Auslasses liegt dabei eine größere Kapillarkraft vor, als im Bereich des Einlasses. Die zweiten Kanäle zweigen an einem oder mehreren Verzweigungspunkten von dem ersten Kanal ab und enden an einem Mittel zum Anhalten (Anhaltemittel) einer Flüssigkeitsströmung, dass als Kapillarstopp ausgeführt ist. Dabei haben die zweiten Kanäle eine größere Kapillarkraft als der erste Kanal an den Verzweigungspunkten. Ferner haben die zweiten Kanäle ein vorbestimmtes Volumen. Für den Transport der Flüssigkeiten sind die Kanäle der mikrofluidischen Anordnung entsprechend ausgelegt. Die gilt z. B. hinsichtlich der Querschnittsflächen, der Querschnittsanordnung, der Oberflächenbeschaffenheit u. ä. Bei einem Kanal handelt es sich um eine Nut oder einen Graben in einer Oberfläche, die mit einem Deckel verschlossen ist. Ein Kanal im Sinne der Erfindung kann im Grunde jede Struktur sein, welche geeignet ist eine Flüssigkeit oder ein Gas bei einem Transport in eine bestimmte Richtung zu leiten.

Die zweiten Kanäle sind in drei Abschnitte aufgeteilt, so dass die zweiten Kanäle ein zweites Kanalsystem bilden. Der erste und der dritte Abschnitt sind als Nut ausgebildet, während der zweite Abschnitt als Ausnehmung ausgebildet ist. Der erste Abschnitt ist an dem Verzweigungspunkt mit dem ersten Kanal verbunden. Der zweite Abschnitt schließt sich an den ersten Abschnitt an. Der dritte Abschnitt schließt sich an den zweiten Abschnitt an und endet an dem Kapillarstopp.

Die Kapillarkraft der Abschnitte der zweiten Kanalsysteme steigt vorteilhaft von den Verzweigungspunkten zu dem Kapillarstopp an.

An die Kapillarstopps an den Enden der zweiten Kanäle schließt sich jeweils ein dritter Kanal an. Diese dritten Kanäle enden an zweiten Auslässen, die einen Kapillarstopp aufweisen. Über den zweiten Auslass mit dem Kapillarstopp ist möglich die Flüssigkeiten aus den dritten Kanälen zu entnehmen.

Das Dosieren und das Trennen erfolgt derart, dass eine an dem Einlass anliegende Flüssigkeitsmenge aufgrund der Kapillarkraft, welche am Einlass vorliegt, in den ersten Kanal eingesaugt und in Richtung des Auslasses transportiert wird. Auf dem Weg vom Einlass zum Auslass wird ein Teil der in den ersten Kanal transportierten Flüssigkeitsmenge an den Verzweigungspunkten in die zweiten Kanäle transportiert, da die zweiten Kanäle im Bereich des Verzweigungspunkts eine größere Kapillarkraft aufweisen als der erste Kanal. Die zweiten Kanäle werden dabei solange mit der Flüssigkeit befüllt, bis das definierte Volumen jedes zweiten Kanals vollständig gefüllt ist. Die dann noch in dem ersten Kanal enthaltene oder noch am Einlass anliegende Flüssigkeitsmenge wird dann aufgrund der Kapillarkraft innerhalb des ersten Kanals zu dessen Auslass transportiert. Ist die gesamte überschüssige Flüssigkeitsmenge zum Auslass transportiert, liegt in dem ersten Kanal eine Gasphase vor. Über diese Gasphase ist die dosierte Flüssigkeitsmenge in dem zweiten Kanal von der überschüssigen Flüssigkeitsmenge fluidisch getrennt.

Die höhere Kapillarkraft des zweiten Kanals gegenüber dem ersten Kanal am Verzweigungspunkt, kann dadurch erreicht werden, dass am Übergang vom ersten Kanal zum zweiten Kanal eine sprunghafte Änderung der geometrischen Eigenschaften oder eine sprunghafte Änderung der Oberflächeneigenschaften der Wandung am Übergang vorliegt. Ein Maß für die Kapillarkraft am Übergang ist dabei die Druckdifferenz, die gemäß der folgenden Formel berechenbar ist, wie sie auch beispielsweise in einer Veröffentlichung von Hosokawa et. al. angegeben wurde (K. Hosokawa, T. Fujii, and I. Endo, "Hydrophobic Microcapillary vent for pneumatic manipulation of liquid in µTas", Proc. "Micro Total Analysis systems '98", pp. 307 - 310, Banff, Canada.):

$$\Delta P = -2\gamma\cos\theta(1/w + 1/h - 1/W - 1/H),$$

wobei $\gamma$ und $\theta$ die Oberflächenspannung der Flüssigkeit und den Randwinkel zwischen der Flüssigkeit und den Wandungen bezeichnen und $w$ und $h$ die Abmessungen des Kanals hinter dem Übergang und $W$ und $H$ die Abmessungen des Kanals vor dem Übergang bezeichnen.

Gemäß der Erfindung kann die mikrofluidische Anordnung ein Einlassreservoir aufweisen, welches dem Einlass des ersten Kanals vorgeschaltet ist. Dieses Einlassreservoir kann dann gemäß der Erfindung eine kleinere Kapillarkraft als der erste Kanal im Bereich des Einlasses haben.

Ferner kann die mikrofluidische Anordnung ein Auslassreservoir aufweisen, welches dem Auslass des ersten Kanals nachgeschaltet ist. Dieses Auslassreservoir hat vorteilhaft eine größere Kapillarkraft als der erste Kanal im Bereich des Auslasses.

Der erste Kanal der mikrofluidischen Anordnung kann gemäß der Erfindung zwischen Einlass und Auslass in Abschnitte aufgeteilt sein, so dass der erste Kanal ein erstes Kanalsystem bildet. Vorteilhaft können dann die Abschnitte des ersten Kanalsystems eine vom Einlass zum Auslass zunehmende Kapillarkraft aufweisen.

In dem dritten Kanal kann beispielsweise eine Reaktionskammer ausgebildet sein, in welcher Reagenzien vorgesehen sind. Die dosierte Flüssigkeit, welche in einem zweiten Kanal enthalten ist, kann in den dritten Kanal transportiert werden, wo die dosierte Flüssigkeit dann mit den Reagenzien in der Reaktionskammer reagiert und ein gewünschtes Produkt entsteht.

Für den Transport in die dritten Kanäle kann die Kapillarkraft der dritten Kanäle größer sein als die der zweiten Kanäle.

Über die zweiten Auslässe kann beispielsweise das Produkt aus der mikrofluidischen Anordnung entnommen werden. Ebenso ist es möglich die mikrofluidische Anordnung und insbesondere den zweiten und den dritten Kanal über diesen zweiten Auslass zu entlüften. Über den zweiten Auslass kann ferner eine weitere Reaktionskammer o.ä. mit der erfindungsgemäßen Anordnung verbunden sein.

Bei einer mikrofluidischen Anordnung können einzelne oder alle Abschnitte des ersten Kanalsystems, der zweiten Kanalsysteme und/oder der dritten Kanalsysteme mäanderförmig, als Hohlräume und/oder mit einem saugfähigem Material ausgestaltet sein. Ferner kann die mikrofluidische Anordnung im Bereich des Verzweigungspunkts mit einem Belüftungskanal verbunden sein. Anhand der Zeichnungen sind mikrofluidische Anordnungen zum Dosieren und zum Trennen einer ersten Flüssigkeitsmenge von einer zweiten Flüssigkeitsmenge dargestellt. Darin zeigt

Fig. 1                 eine schematische Darstellung einer nicht erfindungsgemäßen mikrofluidischen Anordnung,

Fig. 2 bis Fig. 7      ein Ausführungsbeispiel einer erfindungsgemäßen Anordnung in unterschiedlichen Befüllungszuständen und

Fig. 8a bis 8c         ein vereinfachtes Beispiel einer Verbindung eines ersten Kanals und eines zweiten Kanals.

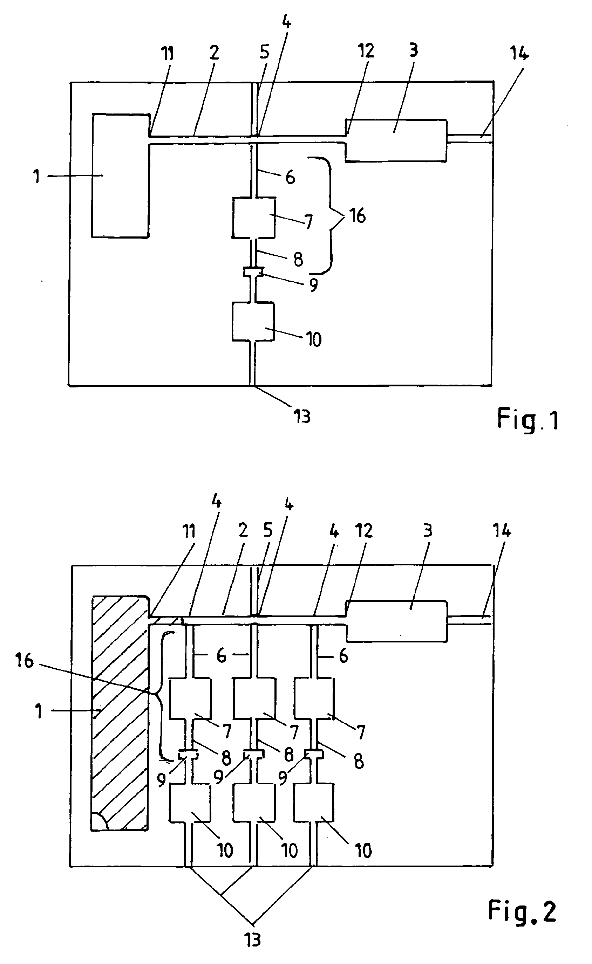

Die in den Fig. 1 bis Fig. 8c dargestellten Beispiele für mikrofluidische Anordnungen können Teil einer größeren Gesamtanordnung sein. Sie können beispielsweise mit weiteren mikrofluidischen Anordnungen für die gleichen oder auch für andere Zwecke auf einem Probenträger z. B. aus Kunststoff oder Silizium, insbesondere einer Mikrotiterplatte vorgesehen sein.

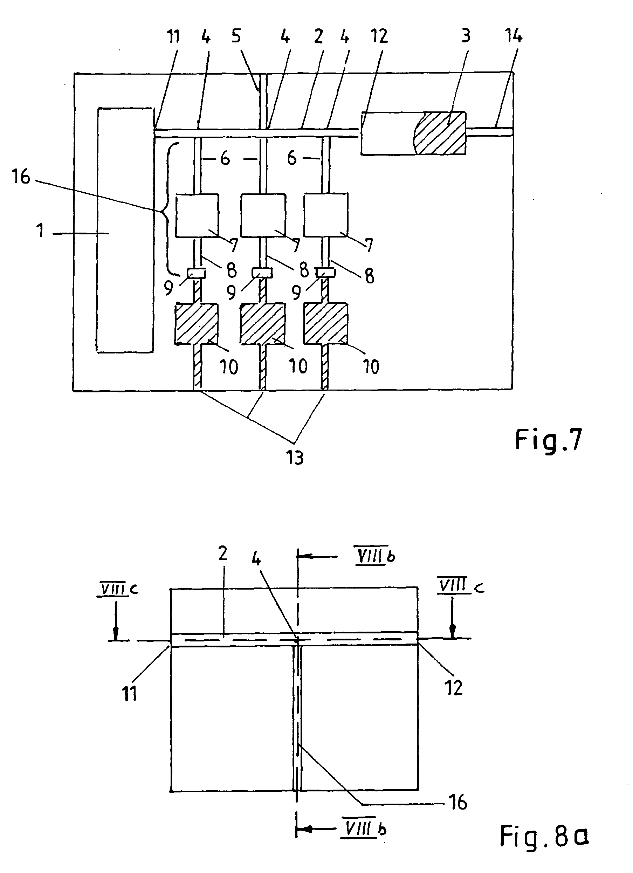

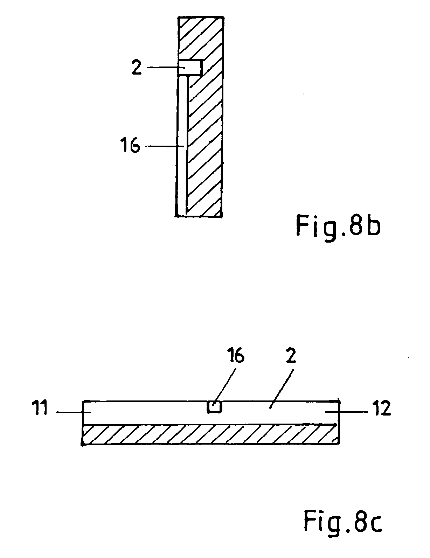

Das in der Erfindung genutzte Prinzip zur Befüllung von Kanälen soll anhand des vereinfachten Beispiels einer Anordnung gemäß Fig. 8a bis 8c erläutert werden. Die mikrofluidische Anordnung gemäß Fig. 8 bis 8c weist einen ersten Kanal 2 mit einem Einlass und einem Auslass 12 auf. An einem Verzweigungspunkt 4 des ersten Kanals 2 zwischen dem Einlass 11 und dem Auslass 12 zweigt ein zweiter Kanal 16 von dem ersten Kanal 2 ab. Dieser zweite Kanal 16 hat an dem Verzweigungspunkt 4 eine größere Kapillarkraft als der erste Kanal 2. Ferner hat der zweite Kanal 16 ein genau bestimmtes Volumen. Eine Flüssigkeit, welche über den Einlass 11 in den ersten Kanal 2 eingebracht wird, wird aufgrund der in dem ersten Kanal 2 wirkenden Kapillarkräfte zum Verzweigungspunkt 4 transportiert. Wegen der größeren Kapillarkraft des zweiten Kanals 16 im Vergleich zum ersten Kanal 2 am Verzweigungspunkt 4 wird ein Teil der Flüssigkeit am Verzweigungspunkt 4 in den zweiten Kanal 16 transportiert, und zwar so lange, bis der zweite Kanal 16 vollständig mit Flüssigkeit gefüllt ist. Der zweite Kanal 16 enthält in diesem Moment eine erste genau dosierte Flüssigkeitsmenge. Ein anderer Teil der Flüssigkeit, welche an dem Einlass 11 in den ersten Kanal 2 eingebracht ist, wird über den Verzweigungspunkt 4 hinaus in Richtung zum Auslass 12 transportiert. Sobald an dem Einlass 11 keine weitere Flüssigkeit mehr in den ersten Kanal 2 eintritt, wandert eine Gasblase in den ersten Kanal 2 ein. Diese erreicht früher oder später den Verzweigungspunkt 4. Sobald diese Gasblase den Verzweigungspunkt 4 passiert hat, ist die in Transportrichtung vor der Gasblase liegende zweite Flüssigkeitsmenge von der in dem zweiten Kanal 16 genau dosierten enthaltenen ersten Flüssigkeitsmenge fluidisch getrennt. Die in dem ersten Kanal über dem Verzweigungspunkt 4 hinaustransportierte zweite Flüssigkeitsmenge tritt nach dem sie den Auslass 12 erreicht hat am Auslass 12 aus dem ersten Kanal 2 aus.

Das in der Fig. 1 dargestellte Beispiel für eine mikrofluidische Anordnung weist einen ersten Kanal 2, einen zweiten Kanal 16 und einen dritten Kanal 10 auf. Dabei weisen sowohl der erste Kanal 2, der zweite Kanal 16 als auch der dritte Kanal 10 mehrere Abschnitte auf, weshalb die Kanäle 2, 16, 10 im Folgenden als erstes Kanalsystem 2, zweites Kanalsystem 16 beziehungsweise drittes Kanalsystem 10 bezeichnet werden. Ferner weist das erste Ausführungsbeispiel ein Einlassreservoir 1, ein Auslassreservoir 3 und einen Belüftungskanal 5 auf. Anstelle des Belüftungskanals 5 kann zur Belüftung der Kanalsysteme auch eine Belüftung über das Einlassreservoir 1 erfolgen, welches auf nicht dargestellte Weise zum Befüllen mit einer Flüssigkeit mit der Umgebung verbunden ist. Die aufgezählten Komponenten des ersten Ausführungsbeispiels einer mikrofluidischen Anordnung sind als Kavitäten in einem Probenträger vorgesehen. Die Kavitäten sind als Ausnehmungen, Gräben und/oder Nute in einer Oberfläche des Probenträgers angeordnet. Diese Oberfläche des Probenträgers ist dann mittels einer Folie, einem Deckel oder ähnlichem abgedeckt.

Das Einlassreservoir 1 kann von außen über eine nicht dargestellte Öffnung mit einer Flüssigkeit befüllt werden. An dieses Einlassreservoir schließt sich das erste Kanalsystem 2 an, das aus einem Kanal, einem Einlass 11 und einem Auslass 12 besteht, zwischen denen sich der Kanal erstreckt. Das Einlassreservoir 1 ist über den Einlass 11 an das erste Kanalsystem 2 angeschlossen. An den Auslass 12 des ersten Kanalsystems 2 schließt sich dann das Auslassreservoir 3 an. Dieses Auslassreservoir 3 ist über einen Entlüftungskanal mit der Umgebung verbunden. Stattdessen kann das Auslassreservoir 3 über Löcher, Kanäle oder dergleichen in dem Deckel entlüftet werden. Zwischen dem Einlass und dem Auslass 12 zweigt von dem Kanal des ersten Kanalsystems 2 an einem Verzweigungspunkt 4 das zweite Kanalsystem 16 ab. Die Form und die Fläche des Querschnitts der Kanäle an dem Verzweigungspunkt 4 beim Übergang vom ersten Kanalsystem 2 zum zweiten Kanalsystem 16, ändert sich sprunghaft. An diesen Stellen geht - in Transportrichtung gesehen - ein flacher und breiter Kanal in einen tiefen schmalen Kanal über.

Das zweite Kanalsystem 16 besteht aus drei Abschnitten 6, 7, 8, nämlich einem ersten Abschnitt 6, welcher als Nut ausgeführt ist und so einen Kanal bildet, einem zweiten Abschnitt 7, welcher als Ausnehmung ausgeführt ist, und einem dritten Abschnitt 8, der als Nut ausgeführt ist und so einen Kanal bildet. Dabei ist der erste Abschnitt 6 an dem Verzweigungspunkt 4 mit dem ersten Kanalsystem 2 verbunden. An diesen ersten Abschnitt 6 schließt sich dann der zweite Abschnitt 7 an, an welchen sich dann wiederum der dritte Abschnitt 8 anschließt. Der den dritten Abschnitt 8 bildende Kanal mündet in einen Kapillarstopp 9. An diesen Kapillarstopp 9 schließt sich dann das dritte Kanalsystem 10 an, welches im Wesentlichen aus einer Ausnehmung besteht, welche über zwei Kanäle einerseits mit dem Kapillarstopp 9 und andererseits mit einem zweiten Auslass 13 verbunden ist, welcher in die Umgebung mündet. Ferner kann das zweite Kanalsystem 16 und/oder das dritte Kanalsystem 10 mit einem Entlüftungs- bzw. Belüftungskanal versehen sein.

Am Verzweigungspunkt 4 zweigt neben dem zweiten Kanalsystem 16 auch der Belüftungskanal 5 ab, welcher mit seinem anderen Ende in die Umgebung mündet.

Die einzelnen Kanalsysteme des Ausführungsbeispiels weisen eine unterschiedliche Kapillarkraft auf. So ist insbesondere die Kapillarkraft des zweiten Kanalsystems 16 am Verzweigungspunkt 4 größer als die Kapillarkraft des ersten Kanalsystems 2 an diesem Verzweigungspunkt 4. Außerdem ist die Kapillarkraft des ersten Kanalsystems 2 größer als die Kapillarkraft des Einlassreservoirs 1. Umgekehrt ist dagegen die Kapillarkraft des ersten Kanalsystems 2 kleiner oder gleich der des Auslassreservoirs 3. Innerhalb des zweiten Kanalsystems 16 können die Abschnitte 6, 7, 8 eine gleiche Kapillarkraft aufweisen. Vorteilhaft ist es jedoch so, dass die Kapillarkraft des dritten Abschnitts 8 größer ist als die des zweiten Abschnitts 7 und die des zweiten Abschnitts 7 größer ist als die des ersten Abschnitts 6. Der Belüftungskanal 5 hat vorteilhaft eine Kapillarkraft, die kleiner ist als die des ersten Kanalsystems 2. Ebenso hat der Entlüftungskanal 14 vorteilhaft eine Kapillarkraft, die kleiner ist als die des Auslassreservoirs 3.

Das Volumen des Einlassreservoirs 1 ist kleiner oder gleich der Summe der Volumina des Auslassreservoirs 3 und des zweiten Kanalsystems 16.

Wird nun das Einlassreservoir 1 mit einer Flüssigkeit befüllt, geschieht folgendes: Aufgrund der höheren Kapillarkraft in dem ersten Kanalsystem 2 wird die in dem Einlassreservoir 1 enthaltene Flüssigkeit in das erste Kanalsystem 2 transportiert, welches sich vom Einlass 11 in Richtung des Verzweigungspunkts 4 befüllt. Sobald die Flüssigkeit den Verzweigungspunkt 4 erreicht hat, teilt sich der Flüssigkeitsstrom auf. Aufgrund der höheren Kapillarkraft des zweiten Kanalsystems 16 wird ein Teil der vom Einlass 11 in das erste Kanalsystem 2 einströmenden Flüssigkeit in das zweite Kanalsystem 16 gefördert. Ein anderer wesentlich kleinerer Teil, der in das erste Kanalsystem 2 einströmenden Flüssigkeit, wird über den Verzweigungspunkt 4 hinaus im ersten Kanalsystem 2 zu dessen Auslass 12 transportiert. Die Kapillarkräfte sind dabei so zueinander gewählt, dass die in das zweite Kanalsystem 16 einströmende Flüssigkeit dieses zweite Kanalsystem 16 vollständig befüllt hat, bevor das Einlassreservoir 1 und der zwischen dem Einlass 11 und dem Verzweigungspunkt 4 liegende Teil des ersten Kanalsystems 2 vollständig von Flüssigkeit geleert sind. D. h. in dem Moment, in dem die in das zweite Kanalsystem 16 einströmende Flüssigkeit den Kapillarstopp 9 erreicht hat, ist am Verzweigungspunkt 4 noch Flüssigkeit im ersten Kanalsystem 2 enthalten. Dadurch kann das vorbestimmte Volumen dieses zweiten Kanalsystems 16 vollständig befüllt werden, wodurch sich in diesem zweiten Kanalsystem 16 ein genau dosiertes Volumen der Flüssigkeit einstellt. Ebenso ist es aber auch denkbar, dass das erste Kanalsystem 2 im Bereich des Verzweigungspunkts 4 keine Flüssigkeit mehr enthält wenn das zweite Kanalsystem 16 vollständig befüllt ist.

Ist das zweite Kanalsystem 16 vollständig mit Flüssigkeit gefüllt, kann somit keine weitere Flüssigkeit in das zweite Kanalsystem 16 einströmen. Die noch in dem Einlassreservoir und/oder in dem ersten Kanalsystem 2 zwischen dessen Einlass und dem Verzweigungspunkt 4 enthaltene Flüssigkeit wird dann durch die Kapillarkraft des ersten Kanalsystems 2 zum Auslassreservoir 3 transportiert, wobei der Flüssigkeitsteil in dem ersten Kanalsystem 2 von dem in dem zweiten Kanalsystem 16 stehenden Flüssigkeitsteil abreißt, sobald in den Einlass 11 anstelle der Flüssigkeit ein Gas, zum Beispiel Luft, eintritt. Der Flüssigkeitsteil in dem ersten Kanalsystem 2 wird dann aufgrund der höheren Kapillarkraft des Auslassreservoirs 3 gegenüber dem ersten Kanalsystem 2 vollständig aus dem ersten Kanalsystem 2 herausgesaugt. Die dabei in dem Auslassreservoir 3 verdrängte Luft wird über den Entlüftungskanal 14 aus dem Auslassreservoir 3 transportiert.

Sobald jegliche Flüssigkeitsmenge aus dem Einlassreservoir 1 und dem ersten Kanalsystem 2 in das zweite Kanalssystem 16 bzw. in das Auslassreservoir 3 transportiert ist, liegen zwei voneinander getrennte Flüssigkeitsmengen in dem zweiten Kanalsystem 16 einerseits und dem Auslassreservoir 3 andererseits vor. Die anfänglich in das Einlassreservoir 1 eingefüllte Flüssigkeitsmenge ist verhältnismäßig ungenau dosiert. Dagegen ist nach dem Flüssigkeitstransport aus dem Einlassreservoir 1 in das zweite Kanalsystem 16 bzw. das Auslassreservoir 3 die in dem zweiten Kanalsystem 16 enthaltene Flüssigkeitsmenge A aufgrund des vorbestimmten Volumens dieses Kanalsystems genau definiert. In dem Auslassreservoir 3 ist dagegen eine undefinierte überschüssige Flüssigkeitsmenge B enthalten. Die beiden in der mikrofluidischen Anordnung enthaltenen Flüssigkeitsmengen, nämlich die in dem zweiten Kanalsystem 16 enthaltene dosierte Flüssigkeitsmenge A und die in dem Auslassreservoir 3 enthaltene undosierte Flüssigkeitsmenge B sind fluidisch durch die in dem ersten Kanalsystem 2 enthaltene Gasphase voneinander getrennt.

Die in dem definierten Volumen des zweiten Kanalsystems 16 enthaltene Flüssigkeit kann dann nach Aufhebung der Wirkung des Kapillarstopps 9 in das dritte Kanalsystem 10 transportiert werden. Dieses ist anhand der Fig. 7 für das zweite Ausführungsbeispiel näher beschrieben.

Das zweite in den Fig. 2 bis Fig. 6 dargestellte erfindungsgemäße Ausführungsbeispiel entspricht in weiten Teilen der in der Fig. 1 dargestellten Anordnung. Daher sind gleiche Elemente der mikrofluidischen Anordnungen gemäß Fig. 1 bzw. Fig. 2 bis Fig. 6 mit gleichen Bezugszeichen versehen. Die Anordnung gemäß Figur 1 und das Ausführungsbeispiel der Erfindung unterscheiden sich lediglich dadurch, dass bei dem Ausführungsbeispiel mehrere, nämlich drei zweite Kanalsysteme 16 und drei dritte Kanalsysteme 10 vorgesehen sind. Außerdem ist das Einlassreservoir 1 deutlich größer ausgebildet, wobei das Volumen des Einlassreservoirs 1 auch hier kleiner oder gleich der Summen der Volumina der zweiten Kanalsysteme 16 und des zweiten Auslassreservoirs 3 ist.

Die drei zweiten Kanalsysteme 16 zweigen in der Richtung vom Einlass 11 zum Auslass 12 hintereinander von dem Kanal des ersten Kanalsystems 2 an Verzweigungspunkten 4 ab. An den Verzweigungspunkten 4 schließen sich jeweils die ersten Abschnitte 6 des zweiten Kanalsystems 16 an. Diese ersten Abschnitte 6 des Kanalsystems münden dann wie bereits von der Anordnung gemäß Fig. 1 bekannt, in einen zweiten Abschnitt 7, der dann in den dritten Abschnitt 8 mündet. Der dritte Abschnitt 8 des zweiten Kanalsystems 16 endet dann an jeweils einem Kapillarstopp 9. Hinter dem Kapillarstopp 9 schließt sich dann jeweils ein drittes Kanalsystem 10 an, welches in je einem zweiten Auslass 13 mündet.

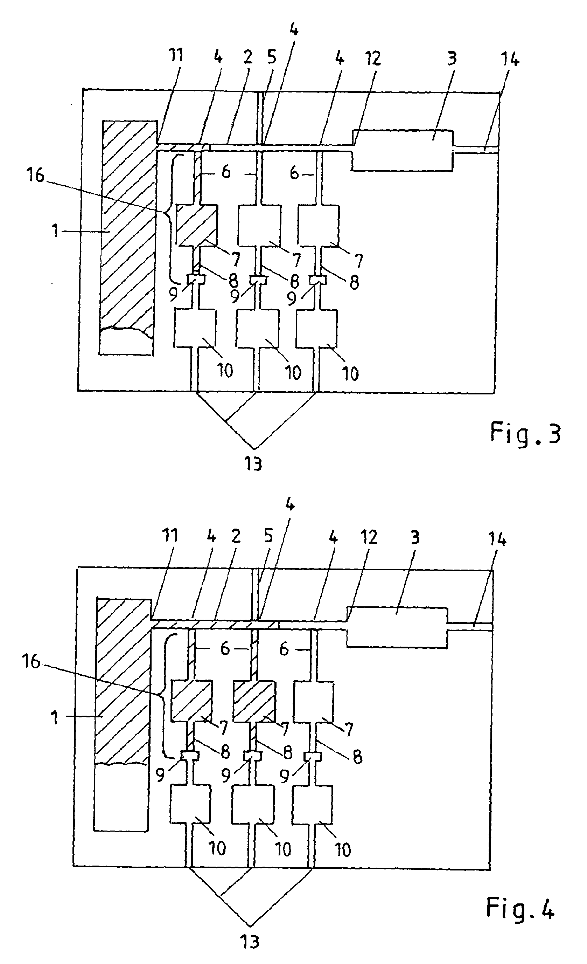

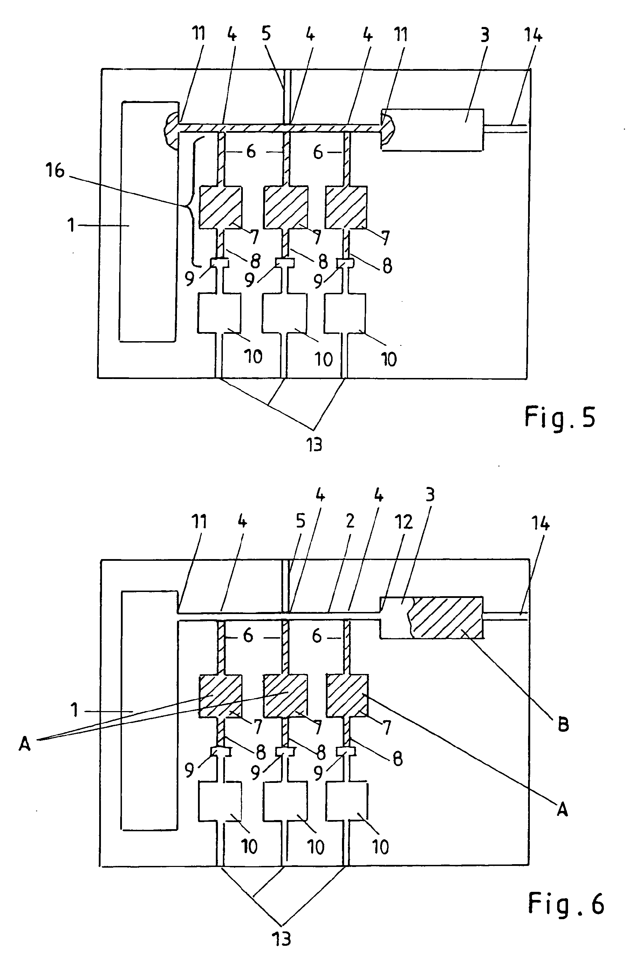

Wird nun in das Ausführungsbeispiel der Erfindung gemäß der Fig. 2 bis Fig. 6 das Einlassreservoir 1 von außen mit einer Flüssigkeit befüllt, tritt diese Flüssigkeit am Einlass 11 in das erste Kanalsystem 2 ein. Aufgrund der wirkenden Kapillarkräfte zieht sich die Flüssigkeit in den Kanal des ersten Kanalsystems 2 herein (Fig. 2) bis sie an dem ersten Verzweigungspunkt 4 angelangt. An dieser Stelle zweigt ein Flüssigkeitsstrom in das in der Darstellung links angeordnete zweite Kanalsystem 16 ein. Dieses linke zweite Kanalsystem 16 wird vollständig mit der Flüssigkeit befüllt. Erst dann wird die Flüssigkeit weiter in dem Kanal des ersten Kanalsystems 2 deutlich vorangetrieben (Fig. 3). Sobald es den in der Mitte angeordneten Verzweigungspunkt 4 erreicht, zweigt von dem Strom in dem Kanal des ersten Kanalsystems 2 ein weiterer Flüssigkeitsstrom in das mittig angeordnete zweite Kanalsystem 16 ab (Fig. 4). Sobald dieses vollständig bis zu dem Kapillarstopp 9 befüllt ist, und der Flüssigkeitsstrom in dem Kanal des ersten Kanalsystems 2 den rechten Verzweigungspunkt 4 erreicht hat, wird das rechte zweite Kanalsystem 16 befüllt. Ist auch dieses vollständig mit der Flüssigkeit befüllt, wird die verbleibende in dem Kanal des ersten Kanalsystems 2 befindliche Flüssigkeit und gegebenenfalls die in dem Einlassreservoir 1 verbliebene Flüssigkeit aufgrund der Kapillarkräfte in das Auslassreservoir 3 transportiert (Fig. 5), wobei die in dem Auslassreservoir 3 verdrängte Luft über den Entlüftungskanal 14 austreten kann.

Bei dem in den Figuren 2 bis 7 dargestelltem Ausführungsbeispiel der Erfindung werden die definierten Volumina der zweiten Kanalsysteme 16, im Wesentlichen nacheinander befüllt. Durch eine entsprechende Ausgestaltung der Kanäle der ersten Abschnitte 6 der zweiten Kanalsysteme 16, und durch eine entsprechende Ausgestaltung des ersten Kanalsystems kann die Kapillarkraft aber auch so eingestellt werden, dass die zweiten Kanalsysteme 16, annähernd gleichzeitig befüllt werden. Dabei bleibt die in dem ersten Kanalsystem 2 strömende Flüssigkeit nicht in den Verzweigungspunkten bis zur vollständigen Befüllung stehen sondern wird ohne große Verzögerung bis zum ersten Auslass 13 transportiert. Sobald die Flüssigkeit die Verzweigungspunkte 4 erreicht hat beginnt dann das Befüllen des an dem jeweiligen Verzweigungspunkt 4 ausgeschlossenen zweiten Kanalsystem 16.

Auch bei dem erfindungsgemäßen Ausführungsbeispiel gemäß der Fig. 2 bis Fig. 6 ist somit im vorläufigen Endzustand (Fig. 6) die in dem Auslassreservoir 3 befindliche Flüssigkeit B von den dosierten in den zweiten Kanalsystemen 16 befindliche Flüssigkeiten A durch eine Gasphase fluidisch getrennt.

Sowohl in der Anordnung gemäß der Fig. 1 als auch in dem erfindungsgemäßen Ausführungsbeispiel gemäß der Fig. 2 bis Fig. 6 sind die Ausnehmungen der dritten Kanalsysteme 10 als Reaktionskammern ausgeführt. D. h. in diesen Ausnehmungen sind Reagenzien eingebracht. Durch ein Anlegen eines Unterdrucks an den zweiten Auslässen 13 der mikrofluidischen Anordnungen, durch Erzeugen eines kurzen Überdrucks in den dritten Abschnitten 8 der zweiten Kanalsysteme 16, (beispielsweise durch mechanisches Drücken auf den Deckel der mikrofluidischen Anordnung im Bereich der dritten Abschnitte 8, durch lokales Erhitzen, mittels piezoelektrischer Elemente o. ä.) können die Kapillarstopps 9 benetzt, d. h. ihre Wirkung aufgehoben werden. Danach können nun die fluidisch von der Flüssigkeit in dem Auslaufreservoir getrennten Flüssigkeiten A über die Kapillarstopps 9 in die Reaktionskammern des dritten Kanalsystems transportiert werden. Der Transport erfolgt dabei vorteilhaft durch die Wirkung von Kapillarkräften, ebenso ist aber auch ein Transport aufgrund von Druckeinwirkung - sei es Überdruck, sei es Unterdruck - möglich. Die dosierten Flüssigkeiten A reagieren dann in den Reaktionskammern mit den dort angeordneten Reagenzien wodurch das gewünschte Produkt entsteht.

Die Art und Weise wie die unterschiedlichen Kapillarkräfte der einzelnen Kanalsysteme bzw. einzelne Abschnitte in den Kanalsystemen hergestellt werden, ist dem einschlägigen Fachmann bekannt. Beispielsweise können unterschiedliche Querschnittsflächen der Hohlräume und Nuten ausschlaggebend für die Kapillarkräfte sein. Auch sind Kanten, Ecken oder dergleichen Möglichkeiten, wie die Kapillarkraft eingestellt werden kann. Ferner können saugfähige Materialien in Hohlräume eingebracht werden, welche bei einem Kontakt mit der Flüssigkeit diese mit großer Geschwindigkeit aufsaugen.

Ebenso gibt es verschiedene Möglichkeiten, wie Kapillarstopps 9 erzeugt werden können. Eine davon ist, eine einfache Querschnittserweiterung des Kanalabschnitts. An dieser Stelle wäre dann die Kapillarkraft verringert, wodurch ein Flüssigkeitsstrom zum Stehen kommt. Ebenso ist es bekannt, hydrophobe oder raue Oberflächen in den Kanälen vorzusehen, um ein Stehenbleiben der Flüssigkeit zu erreichen.

## Patentansprüche

1. Mikrofluidische Anordnung zum Dosieren einer oder mehrerer erster dosierter Flüssigkeitsmengen (A) und zum Trennen dieser von einer zweiten Flüssigkeitsmenge (B), umfassend folgende Merkmale:

- die Anordnung weist einen ersten Kanal (2) und mehrere zweite Kanäle (16) auf;
- der erste Kanal (2) weist einen Einlass (11) und einen Auslass (12) auf;
- die Anordnung weist im Bereich des Auslasses (12) eine Kapillarkraft auf, die größer oder gleich der Kapillarkraft im Bereich des Einlasses ist;
- die zweiten Kanäle (16) zweigen an einem oder mehreren Verzweigungspunkten (4) von dem ersten Kanal (2) ab;

- die zweiten Kanäle (16) haben eine größere Kapillarkraft als der erste Kanal (2) an den Verzweigungspunkten (4);
- die zweiten Kanäle (16) haben ein vorbestimmtes Volumen
- die zweiten Kanäle (16) beginnen an den Verzweigungspunkten (4) und enden an einem Kapillarstopp (9),
- die zweiten Kanäle (16) sind in erste Abschnitte (6), zweite Abschnitte (7) und dritte Abschnitte (8) aufgeteilt und bilden so ein zweites Kanalsystem,
- der erste Abschnitt (6) ist als Nut ausgeführt und bildet einen Kanal, der zweite Abschnitt (7) ist als Ausnehmung ausgeführt und der dritte Abschnitt (8) ist als Nut ausgeführt und bildet einen Kanal,
- der erste Abschnitt (6) ist an dem Verzweigungspunkt (4) mit dem ersten Kanal (2) verbunden,
- an den ersten Abschnitt schließt sich der zweite Abschnitt (7) an,
- der dritte Abschnitt (8) schließt sich an den zweiten Abschnitt (7) an und endet an dem Kapillarstopp (9)
- an den Kapillarstopp (9) schließt sich je ein dritter Kanal (10) an,
- die dritten Kanäle (10) weisen je einen zweiten Auslass (13) auf,
- die zweiten Auslässe (13) weisen je einen Kapillarstopp auf,
- die Kanäle (2, 16, 10) sind als Nuten oder Gräben in einer Oberfläche angeordnet, die mit einem Deckel abgedeckt sind.

2. Mikrofluidische Anordnung nach dem vorhergehenden Anspruch, **dadurch gekennzeichnet, dass** eine größere Kapillarkraft der zweiten Kanäle (16) an den Verzweigungspunkten (4) gegenüber der Kapillarkraft des ersten Kanals (2) durch sich sprunghaft ändernde geometrische Eigenschaften an den Übergängen vom ersten Kanal (2) zu den zweiten Kanälen (16) eingestellt ist.

3. Mikrofluidische Anordnung nach einem der beiden vorhergehenden Ansprüche, **dadurch gekennzeichnet, dass** die größere Kapillarkraft der zweiten Kanäle (16) an den Verzweigungspunkten (4) gegenüber der Kapillarkraft des ersten Kanals (1) durch sich sprunghaft ändernde Oberflächeneigenschaften der Wandungen an den Übergängen vom ersten Kanal (2) zu den zweiten Kanälen (16) eingestellt ist.

4. Mikrofluidische Anordnung nach einem der vorhergehenden Ansprüche, **dadurch gekennzeichnet, dass** dem Einlass (11) des ersten Kanals (2) ein Einlassreservoir (1) vorgeschaltet ist.

5. Mikrofluidische Anordnung nach dem vorhergehenden Anspruch, **dadurch gekennzeichnet, dass** das Einlassreservoir (1) eine kleinere oder gleiche Kapillarkraft hat als der erste Kanal im Bereich des Einlasses (11).

6. Mikrofluidische Anordnung nach einem der vorhergehenden Ansprüche, **dadurch gekennzeichnet, dass** dem Auslass (12) des ersten Kanals (2) ein Auslassreservoir (3) nachgeschaltet ist.

7. Mikrofluidische Anordnung nach dem vorhergehenden Anspruch, **dadurch gekennzeichnet, dass** das Auslassreservoir (3) eine größere oder gleiche Kapillarkraft hat als der erste Kanal (2) im Bereich des Auslasses (12).

8. Mikrofluidische Anordnung nach einem der vorhergehenden Ansprüche, **dadurch gekennzeichnet, dass** der erste Kanal (2) zwischen Einlass (11) und Auslass (12) in Abschnitte aufgeteilt ist und so ein erstes Kanalsystem bildet.

9. Mikrofluidische Anordnung nach dem vorhergehenden Anspruch, **dadurch gekennzeichnet, dass** die Abschnitte des ersten Kanals (2) eine vom Einlass (11) zum Auslass (12) zunehmende Kapillarkraft aufweisen.

10. Mikrofluidische Anordnung nach dem vorhergehenden Anspruch, **dadurch gekennzeichnet, dass** die Kapillarkraft der Abschnitte (6, 7, 8) der zweiten Kanäle (16) von den Verzweigungspunkten (4) bis zu den Kapillarstopps (9) gleich bleibt oder ansteigt.

11. Mikrofluidische Anordnung nach dem vorhergehenden Anspruch, **dadurch gekennzeichnet, dass** die Kapillarkraft der dritten Kanäle (10) gleich oder größer ist als die der zweiten Kanäle (6, 7, 8,).

12. Mikrofluidische Anordnung nach einem der vorhergehenden Ansprüche, **dadurch gekennzeichnet, dass** einzelne oder alle Abschnitte (6, 7, 8, 10) des ersten Kanalsystems (2), der zweiten Kanalsysteme (16), der dritten Kanalsysteme (10) und/oder das Auslassreservoir mäanderförmig ausgeführt sind.

13. Mikrofluidische Anordnung nach einem der vorhergehenden Ansprüche, **dadurch gekennzeichnet, dass** einzelne oder alle Abschnitte (6, 7, 8) des ersten Kanals (2), der zweiten Kanäle (16) und/oder der dritten Kanäle (10) als Hohlräume ausgeführt sind.

**14.** Mikrofluidische Anordnung nach einem der vorhergehenden Ansprüche, **dadurch gekennzeichnet, dass** in einzelnen oder allen Abschnitten (6, 7, 8) des ersten Kanals (2), der zweiten Kanäle (16) und/oder dritten Kanalsysteme (10) und/oder dem Auslassreservoir (3) ein saugfähiges Material angeordnet ist.

**15.** Mikrofluidische Anordnung nach einem der vorhergehenden Ansprüche, **dadurch gekennzeichnet, dass** der erste Kanal (2) im Bereich des Verzweigungspunktes (4) mit einem Belüftungskanal (5) verbunden ist.

**16.** Träger, insbesondere Probenträger, **dadurch gekennzeichnet, dass** der Träger eine mikrofluidische Anordnung nach einem der Ansprüche 1 bis 17 aufweist.

**17.** Verfahren zum Dosieren einer oder mehrerer erster dosierter Flüssigkeitsmengen (A) und zum Trennen dieser von einer zweiten Flüssigkeitsmenge (B) mit einer mikrofluidischen Anordnung nach einem der vorhergehenden Ansprüche, umfassend folgende Schritte:

- die Flüssigkeit dringt aufgrund der am Einlass vorliegenden Kapillarkraft über den Einlass (11) in einen ersten Kanal (2) ein;
- die Flüssigkeit wird in dem ersten Kanal (2) aufgrund der Kapillarkraft vom Einlass (11) zu einem Auslass transportiert;
- die Flüssigkeit wird bis zu einem ersten Verzweigungspunkt (4) transportiert, an dem ein erster zweiter Kanal (16) vom ersten Kanal abzweigt;
- von dem ersten Verzweigungspunkt (4) wird aufgrund der höheren Kapillarkraft des zweiten Kanals (16) an dem Verzweigungspunkt (4) ein erster Teil der Flüssigkeit in einen ersten zweiten Kanal (16) transportiert, bis dieser vollständig mit einer ersten Flüssigkeitsmenge (A) befüllt ist;
- von dem ersten der Verzweigungspunkte (4) wird ein zweiter Teil der Flüssigkeit zu weiteren Verzweigungspunkten (4) transportiert, an denen weitere zweite Kanäle (16) vom ersten Kanal (2) abzweigen;
- sobald der erste der zweiten Kanäle (16) vollständig befüllt ist und die Flüssigkeit in dem ersten Kanal einem Verzweigungspunkt (4) von weiteren Verzweigungspunkten (4) erreicht hat, werden aufgrund der höheren Kapillarkräfte der zweiten Kanäle (16) an den weiteren Verzweigungspunkten (4) nacheinander Teile des zweiten Teils der Flüssigkeit von den weiteren Verzweigungspunkten (4) in die weiteren zweiten Kanäle transportiert, bis diese vollständig mit weiteren ersten Flüssigkeitsmengen (A) befüllt sind, wobei eine Befüllung eines der zweiten Kanäle (16) beginnt, wenn der an dem vorhergehenden Verzweigungspunkt (4) beginnende zweite Kanal (16) vollständig befüllt ist und die Flüssigkeit in dem ersten Kanal den auf den vorhergehenden folgenden Verzweigungspunkt erreicht hat;
- der nach dem letzten der Verzweigungspunkte (4) im ersten Kanal (2) verbleibende Teil der Flüssigkeit wird als zweite Flüssigkeitsmenge (B) durch eine Gasphase von den ersten Flüssigkeitsmengen getrennt und durch Kapillarkraft zum Auslass (12) transportiert, wo er aus dem ersten Kanal (2) austritt.

**Claims**

**1.** Microfluidic arrangement for metering one or more first metered amounts of liquid (A) and for separating the latter from a second amount of liquid (B), comprising the following features:

- the arrangement has a first channel (2) and a plurality of second channels (16);
- the first channel (2) has an inlet (11) and an outlet (12);
- the arrangement has, in the region of the outlet (12), a capillarity which is greater than or equal to the capillarity in the region of the inlet;
- the second channels (16) branch from the first channel (2) at one or more branch points (4);
- the second channels (16) have a larger capillarity than the first channel (2) at the branch points (4);
- the second channels (16) have a predetermined volume;
- the second channels (16) begin at the branch points (4) and end at a capillary stop (9);
- the second channels (16) are divided into first sections (6), second sections (7) and third sections (8) and thus form a second channel system;
- the first section (6) is designed as a groove and forms a channel, the second section (7) is designed as a recess and the third channel (8) is designed as a groove and forms a channel;
- the first section (6) is connected to the first channel (2) at the branch point (4);

- the first section is adjoined by the second section (7);
- the third section (8) adjoins the second section (7) and ends at the capillary stop (9);
- the capillary stop (9) is adjoined by a respective third channel (10);
- the third channels (10) each have a second outlet (13);
- the second outlets (13) each have a capillary stop;
- the channels (2, 16, 10) are arranged as grooves or troughs in a surface, which are covered with a cover.

2. Microfluidic arrangement according to the preceding claim, **characterized in that** a greater capillarity of the second channels (16) at the branch points (4) by comparison with the capillarity of the first channel (2) is set by suddenly changing geometrical properties at the transitions from the first channel (2) to the second channels (16).

3. Microfluidic arrangement according to one of the two preceding claims, **characterized in that** the larger capillarity of the second channels (16) at the branch points (4) by comparison with the capillarity of the first channel (2) is set by suddenly changing surface properties of the walls at the transitions from the first channel (2) to the second channels (16).

4. Microfluidic arrangement according to one of the preceding claims, **characterized in that** an inlet reservoir (1) is connected upstream of the inlet (11) of the first channel (2).

5. Microfluidic arrangement according to the preceding claim, **characterized in that** the inlet reservoir (1) has a capillarity which is less than or equal to the first channel in the region of the inlet (11).

6. Microfluidic arrangement according to one of the preceding claims, **characterized in that** an outlet reservoir (3) is connected downstream of the outlet (12) of the first channel (2).

7. Microfluidic arrangement according to the preceding claim, **characterized in that** the outlet reservoir (3) has a capillarity which is greater than or equal to the first channel (2) in the region of the outlet (12).

8. Microfluidic arrangement according to one of the preceding claims, **characterized in that** the first channel (2) is divided into sections between the inlet (11) and outlet (12) and thus forms a first channel system.

9. Microfluidic arrangement according to the preceding claim, **characterized in that** the sections of the first channel (2) have a capillarity which increases from the inlet (11) to the outlet (12).

10. Microfluidic arrangement according to the preceding claim, **characterized in that** the capillarity of the sections (6, 7, 8) of the second channels (16) remains the same or increases from the branch points (4) up to the capillary stops (9).

11. Microfluidic arrangement according to the preceding claim, **characterized in that** the capillarity of the third channels (10) is greater than or equal to that of the second channels (6, 7, 8).

12. Microfluidic arrangement according to one of the preceding claims, **characterized in that** individual or all sections (6, 7, 8, 10) of the first channel system (2), of the second channel systems (16), of the third channel systems (10) and/or the outlet reservoir are designed to have a meandering shape.

13. Microfluidic arrangement according to one of the preceding claims, **characterized in that** individual or all sections (6, 7, 8) of the first channel (2), of the second channels (16) and/or of the third channels (10) are designed as cavities.

14. Microfluidic arrangement according to one of the preceding claims, **characterized in that** an absorbent material is arranged in individual or all sections (6, 7, 8) of the first channel (2), of the second channels (16) and/or third channel systems (10) and/or the outlet reservoir (3).

15. Microfluidic arrangement according to one of the preceding claims, **characterized in that** the first channel (2) is connected in the region of the branch point (4) to an aeration channel (5).

16. Carrier, in particular a sample carrier, **characterized in that** the carrier has a microfluidic arrangement according to one of Claims 1 to 17.

17. Method for metering one or more first metered amounts of liquid (A) and for separating the latter from a second amount of liquid (B) using a microfluidic arrangement according to one of the preceding claims, comprising the following steps:

- the liquid penetrates via the inlet (11) into a first channel (2) owing to the capillarity present at the inlet;
- the liquid is transported in the first channel (2) from the inlet (11) to an outlet owing to the capillarity;
- the liquid is transported up to a first branch point (4) at which a first second channel (16) branches from the first channel;
- owing to the high capillarity of the second channel (16) at the branch point (4), a first part of the liquid is transported from the first branch point (4) into a first second channel (16) until this is completely filled with a first amount of liquid (A);
- a second part of the liquid is transported from the first of the branch points (4) to further branch points (4) at which further second channels (16) branch from the first channel (2) ;
- as soon as the first of the second channels (16) is completely filled and the liquid in the first channel has reached a branch point (4) of further branch points (4), owing to the higher capillarities of the second channels (16) at the further branch points (4), portions of the second part of the liquid are transported in succession from the further branch points (4) into the further second channels until these are completely filled with further first amounts of liquid (A), wherein a filling of one of the second channels (16) begins when the second channel (16) starting at the preceding branch point (4) is completely filled and the liquid in the first channel has reached the branch point following the preceding one;
- the part of the liquid remaining after the last of the branch points (4) in the first channel (2) is separated as a second amount of liquid (B) by a gas phase from the first amounts of liquid and is transported by capillarity to the outlet (12), where it emerges from the first channel (2).

**Revendications**

1.  Configuration microfluidique pour le dosage d'une ou de plusieurs premières quantités de liquide dosées (A) et pour la séparation de celles-ci d'une deuxième quantité de liquide (B), comprenant les caractéristiques suivantes:

    - la configuration présente un premier canal (2) et plusieurs deuxièmes canaux (16);
    - le premier canal (2) présente une entrée (11) et une sortie (12);
    - la configuration présente, dans la région de la sortie (12), un force capillaire qui est supérieure ou égale à la force capillaire dans la région de l'entrée;
    - les deuxièmes canaux (16) sont dérivés du premier canal (2) en un ou plusieurs points de dérivation (4);
    - les deuxièmes canaux (16) présentent une plus grande force capillaire que le premier canal (2) aux points de dérivation (4);
    - les deuxièmes canaux (16) ont un volume prédéterminé;
    - les deuxièmes canaux (16) commencent aux points de dérivation (4) et se terminent à un arrêt capillaire (9);
    - les deuxièmes canaux (16) sont divisés en premiers segments (6), deuxièmes segments (7) et troisièmes segments (8) et forment ainsi un deuxième réseau de canaux;
    - le premier segment (6) se présente sous la forme d'une rainure et forme un canal, le deuxième segment (7) se présente sous la forme d'un évidement et le troisième segment (8) se présente sous la forme d'une rainure et forme un canal;
    - le premier segment (6) est raccordé au premier canal (2) au point de dérivation (4);
    - le deuxième segment (7) succède au premier segment;
    - le troisième segment (8) succède au deuxième segment (7) et se termine à l'arrêt capillaire (9);
    - un troisième canal (10) succède à chaque arrêt capillaire (9);
    - les troisièmes canaux (10) présentent chacun une deuxième sortie (13);
    - les deuxièmes sorties (13) présentent chacun un arrêt capillaire;
    - les canaux (2, 16, 10) sont disposés sous forme de rainures ou de fosses dans une surface, qui sont recouvertes d'un couvercle.

2.  Configuration microfluidique selon la revendication précédente, **caractérisée en ce qu'**une plus grande force capillaire des deuxièmes canaux (16) aux points de dérivation (4) par rapport à la force capillaire du premier canal (2) est réglée par un changement brusque des propriétés géométriques aux transitions du premier canal (2) vers les deuxièmes canaux (16).

3.  Configuration microfluidique selon l'une quelconque des deux revendications précédentes, **caractérisée en ce que** la plus grande force capillaire des deuxièmes canaux (16) aux points de dérivation (4) par rapport à la force capillaire du premier canal (2) est réglée par un changement brusque des propriétés de surface des parois aux transitions du premier canal (2) vers les deuxièmes canaux (16).

4.  Configuration microfluidique selon l'une quelconque des revendications précédentes, **caractérisée en ce qu'**un réservoir d'entrée (1) est installé avant l'entrée (11) du premier canal (2).

5.  Configuration microfluidique selon la revendication précédente, **caractérisée en ce que** le réservoir d'entrée (1) présente une force capillaire inférieure ou égale à celle du premier canal dans la région de l'entrée (11).

6.  Configuration microfluidique selon l'une quelconque des revendications précédentes, **caractérisée en ce qu'**un réservoir de sortie (3) est installé après la sortie (12) du premier canal (2).

7.  Configuration microfluidique selon la revendication précédente, **caractérisée en ce que** le réservoir de sortie (3) présente une force capillaire supérieure ou égale à celle du premier canal (2) dans la région de la sortie (12).

8.  Configuration microfluidique selon l'une quelconque des revendications précédentes, **caractérisée en ce que** le premier canal (2) est divisé entre l'entrée (11) et la sortie (12) et forme ainsi un premier réseau de canaux.

9.  Configuration microfluidique selon la revendication précédente, **caractérisée en ce que** les segments du premier canal (2) présentent une force capillaire croissante de l'entrée (11) à la sortie (12).

10. Configuration microfluidique selon la revendication précédente, **caractérisée en ce que** la force capillaire des segments (6, 7, 8) des deuxièmes canaux (16) reste constante ou augmente depuis les points de dérivation (4) jusqu'aux arrêts capillaires (9).

11. Configuration microfluidique selon la revendication précédente, **caractérisée en ce que** la force capillaire des troisièmes canaux (10) est égale ou supérieure à celle des deuxièmes canaux (6, 7, 8).

12. Configuration microfluidique selon l'une quelconque des revendications précédentes, **caractérisée en ce que** certains ou tous les segments (6, 7, 8, 10) du premier réseau de canaux (2), des deuxièmes réseaux de canaux (16), des troisièmes réseaux de canaux (10) et/ou le réservoir de sortie sont réalisés sous forme sinueuse.

13. Configuration microfluidique selon l'une quelconque des revendications précédentes, **caractérisée en ce que** certains ou tous les segments (6, 7, 8) du premier canal (2), des deuxièmes canaux (16) et/ou des troisièmes canaux (10) sont réalisés sous forme de cavités.

14. Configuration microfluidique selon l'une quelconque des revendications précédentes, **caractérisée en ce qu'**un matériau absorbant est disposé dans certains ou dans tous les segments (6, 7, 8) du premier canal (2), des deuxièmes canaux (16) et/ou des troisièmes réseaux de canaux (10) et/ou dans le réservoir de sortie (3).

15. Configuration microfluidique selon l'une quelconque des revendications précédentes, **caractérisée en ce que** le premier canal (2) est raccordé à un canal de ventilation (5) dans la région du point de dérivation (4).

16. Support, en particulier porte-échantillons, **caractérisé en ce que** le support présente une configuration microfluidique selon l'une quelconque des revendications 1 à 15.

17. Procédé pour le dosage d'une ou de plusieurs premières quantités de liquide dosées (A) et pour la séparation de celles-ci d'une deuxième quantité de liquide (B) avec une configuration microfluidique selon l'une quelconque des revendications précédentes, comprenant les étapes suivantes:

    - le liquide pénètre dans un premier canal (2) par l'entrée (11) par suite de la force capillaire présente à l'entrée;
    - le liquide est transporté dans le premier canal (2), de l'entrée (11) à une sortie par suite de la force capillaire;
    - le liquide est transporté jusqu'à un premier point de dérivation (4), où un premier deuxième canal (16) est dérivé du premier canal;
    - à partir du premier point de dérivation (4), une première partie du liquide est transportée, par suite de la force capillaire plus élevée du deuxième canal (16) au point de dérivation (4), dans un premier deuxième canal (16), jusqu'à ce que ce dernier soit entièrement rempli avec une première quantité de liquide (A);

- à partir du premier des points de dérivation (4), une deuxième partie du liquide est transportée vers d'autres points de dérivation (4), où d'autres deuxièmes canaux (16) sont dérivés du premier canal (2) ;

- dès que le premier des deuxièmes canaux (16) est entièrement rempli et que le liquide dans le premier canal a atteint un point de dérivation (4) des autres points de dérivation (4), des portions de la deuxième partie du liquide sont transportées l'une après l'autre, par suite des forces capillaires plus élevées des deuxièmes canaux (16) aux autres points de dérivation (4), dans les autres deuxièmes canaux, jusqu'à ce que ceux-ci soient remplis avec d'autres premières quantités de liquide (A), un remplissage d'un des deuxièmes canaux (16) commençant lorsque le deuxième canal (16) commençant au point de dérivation précédent (4) est entièrement rempli et que le liquide dans le premier canal a atteint le point de dérivation qui suit le point de dérivation précédent;

- la partie du liquide, restant dans le premier canal (2) après le dernier des points de dérivation (4), est séparée des premières quantités de liquide par une phase gazeuse sous la forme d'une deuxième quantité de liquide (B) et transportée par la force capillaire jusqu'à la sortie (12), où elle sort du premier canal (2).

Fig.1

Fig.2

Fig.3

Fig.4

Fig.5

Fig.6

Fig.7

Fig.8a

2 ——

16 ——

Fig.8b

16    2

11 ——                    —— 12

Fig.8c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9946045 A
- US 20020195463 A1

- US 6117396 A

**In der Beschreibung aufgeführte Nicht-Patentliteratur**

- **K. Hosokawa ; T. Fujii ; I. Endo.** Hydrophobic Microcapillary vent for pneumatic manipulation of liquid in µTas. *Proc. ''Micro Total Analysis systems '98'',* 307-310